# EUROPEAN PATENT APPLICATION

(11) **EP 3 035 506 A1**
(43) Date of publication of application: **22.06.2016**
(21) Application number: 14198334.6
(22) Date of filing: 16.12.2014
(51) Int. Cl.: H02K 9/19, B62D 5/04

(54) **Electro-mechanical power steering for application in heavy commercial vehicles**

(71) Applicant: Daf Trucks N.V., 5643 TW Eindhoven (NL)
(72) Inventor: van der Knaap, Albertus Clemens Maria, 5643 TW Eindhoven (NL); Raue, Victor, 5643 TW Eindhoven (NL)
(74) Representative: V.O.

(57) **Abstract**

It is aimed to provide a steered axle assembly for a commercial vehicle structure for vehicles larger than 6 tons, the axle assembly comprising:
a steered axle comprised of a steering arrangement for steering the wheels;
an electromotor comprising a sealed compartment mounting a rotor and a stator, at least one of the rotor and stator comprising electrical power wiring arranged for electromechanical actuation of said steered axle;
a steering controller arranged to control said electromotor in correspondence with steering signals received from a main steering unit;
wherein the compartment contains a fluid partly filling said sealed compartment, said fluid in use brought in contact with the electrical power wiring by rotor action so as to cool said electrical power wiring.

## Description

### Field of invention

The invention relates to an electro-mechanical power steering for application in heavy commercial vehicles (e.g. truck-trailer combinations typically larger than 6 tonnes gross vehicle weight). More generally the invention relates to an auxiliary power on demand arrangement for hydraulic systems in heavy commercial vehicles.

### Description of the prior art

State of the art heavy trucks today are equipped with hydraulic power steering systems that typically operate with a continuously operated pressure pump, typically connected with the main engine. Naturally, such arrangements are costly in terms of power consumption, which is especially wasteful in conditions, for instance, highway driving, where not much additional power is necessary. To give insight in the numbers, the auxiliary power supply averagely consumes a typical power of 700 Watt, while the power demand for highway steering would be in the order of only a few Watt.

Also the auxiliary power system needs to be heavily dimensioned to meet extreme power demand options, especially in heavy load cases of low or zero vehicle speed and large steering motion. Park steering and low speed maneuvering on a dry road surface are typical examples of these worst case loading conditions. Such over dimensioning requires large oil flow in the pump and large dimensioning of hydraulic cylinder actuators. Further, since the hydraulic pump is typically coupled to the engine shaft, there is no "sweet spot" optimization of the power take-off as the flow needs to be available for a large range of pump revolution speed (typically ranging from 500 to 2500 rpm).

In the state of the art is considered to apply power on demand type of auxiliary power supplies, in particular, in steering arrangements. For example, an electromotor can be provided that directly engages the wheels and supports the steering wheel movements. Such electro-controlled steering may be used to implement Advanced Driver Assistance Systems, that may be used to interact with the driver, aid him in traffic situations, and even facilitate autonomous driving.

However, while these systems are beginning to surface in passenger cars, in commercial vehicles, particularly of the type of more than 6 tonnes, there is a considerable challenge for dimensioning these systems, in view of the extreme wheel loads and resulting required actuation forces. For these applications, it has been found a challenge to find a suitable electromotor unit to meet the required power demands since the unit may soon become too heavily dimensioned to efficiently accommodate it in the front end of the truck (packaging conflict between radiator, chassis rails, lights, steps for entering cabin compartment, suspension elements, steering shaft and the power steering system itself).

In other prior art systems, e.g. DE20302534 it is contemplated to utilize an hydraulic circuit with an fluid-cooled electromotor. In US 2006/0075751 it is contemplated to provide a cooled electromotor with an external cooling circuit. However, both arrangements are cumbersome for various reasons. In the DE'534 pump flow is less optimal since the electromotor interferes with the pump flow. In US '751 a separate cooling circuit is required. In short there is a need to provide an electro power arrangement, in particular an auxiliary power for electro-mechanical power steering.

### Summary of the invention

It is aimed to provide a steered axle assembly for a commercial vehicle structure for vehicles larger than 6 tons. The axle assembly comprises a steered axle comprised of a steering arrangement for steering the wheels and an electromotor comprising a sealed compartment for mounting a rotor and a stator. At least one of the rotor and stator comprises electrical power wiring arranged for actuating said steered axle. A steering controller is arranged to control said electromotor in correspondence with steering signals received from a main steering unit. The compartment contains a fluid partly filling said sealed compartment, said fluid in use brought in contact with the electrical power wiring by rotor action so as to cool said electrical power wiring. This arrangement has the advantage that the electromotor is designed as a fluid cooled electromotor that is not cooled by a complex space consuming cooling fluid circuit so that an over-dimensioned design (dictated by extreme load cases such as dry parksteer forces) can be avoided.

In an embodiment, the electromotor actuates the steered axle by direct electromechanical actuation. Alternatively, the electromotor actuates a hydraulic fluid pump in a hydraulic pressure circuit.

### BRIEF DESCRIPTION OF THE DRAWINGS

The invention will be further elucidated in the figures:
Figure 1 shows a generic setup of a steering box assembly for a truck vehicle;
Figure 2 shows a detail view of the electromotor and shaft spindle;
Figure 3 shows a chart indicating gain for the steering assembly of the present invention
Figure 4 shows a detailed exemplary setup for a steered axle assembly.

### DETAILED DESCRIPTION

Unless otherwise defined, all terms (including technical and scientific terms) used herein have the same meaning as commonly understood by one of ordinary skill in the art to which this disclosure belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

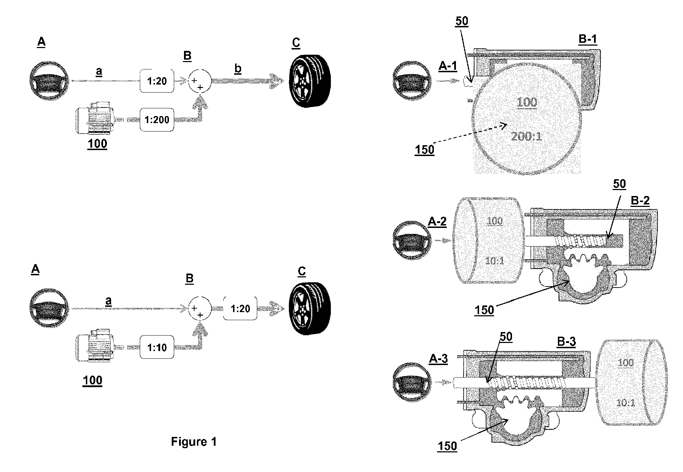

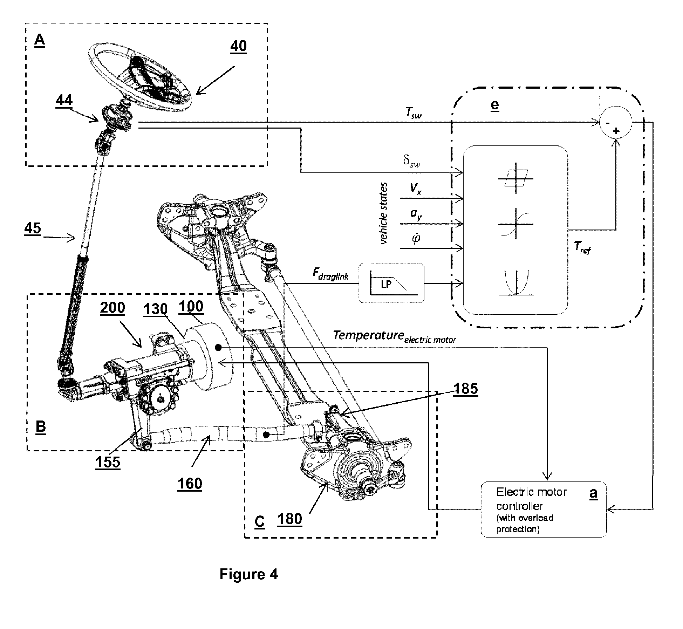

Now turning to Figure 1 there is depicted a schematic transmission scheme for transmitting steering motion of a main steering unit A, in particular, of a commercial vehicle structure, to the wheels of a steered axle assembly C. The main steering unit A may be formed by a steering wheel but may also be another steering device, such as a joystick or other suitable device. In case of a steering wheel, a wheel torque is experienced by the driver during operation of the vehicle, which is important for controlling the driving characteristics, in particular, the orientation of the wheels of the steered axle assembly C. The torque measured in the first stage A of the steering shaft assembly is transmitted (a) to a steering controller arranged to control steering box B in correspondence with measured steering signals (torque and angle) that are generated in the main steering unit A. The driver rotates the steering wheel (40) (which is part of steering unit A) in order to control the course of the vehicle. These motions are input for the steering system; on the one hand mechanically via the steering shaft and on the other hand electronically via a control system that uses information from the measured steering signals in order to generate active steering forces to orient (around the vertical axis) the wheels on the ground. As a result the steering box B generates supportive forces to reduce the steering effort of the driver. The steering box B, as depicted in the embodiment, may comprise an electromotor 100 that actuates the steered axle C, via a suitable connection that couples the steering shaft to the steering arrangement of the steered axle. The electromotor comprises a rotor shaft that is integrated in the steering box unit, that is typically construed out of the well-known elements (see also Figure 4) such as a spindle with recirculating roller balls driving a slider means with teeth that rotates a pinion wheel on a sector shaft. A so-called Pitman arm is connected to the sector shaft in order to transmit the steering forces via a draglink and a steering arm to the wheels on the ground. The steering box B may also be part of any other transmission assembly known to the skilled person. As an alternative, the steering box B may transmit steering actuation by a hydraulic circuit, preferably based on a closed center circuit, that may decouple direct mechanical actuation. Figure 1 shows a variety of embodiments wherein an electromotor 100 is coupled to the steering box.

In the first embodiment B-1, a rotor shaft of electromotor 100 is coupled to the pinion wheel 150 in the steering box. Accordingly the motor 100 is directly coupled to a steering actuator 150 acting on the wheels, after transmission reduction, e.g. by direct coupling to a rotating Pitman arm. In this embodiment, the required reduction ratio is relatively large, for example, in the range of 100-600, but has the advantage that steering stiffness and control are enhanced in the axle assembly C.

In the second embodiment B-2, the electromotor 100 is directly driving the input shaft of the steering gear. In this case, the rotor shaft is coupled in-line via a reductor between a steering shaft and a spindle 50 i.e. electromotor 100 is placed in-line with the steering column A-1 of a wheel shaft driving a spindle 50, i.e. on the front side of the steering box B-2, in line with the spindle 50. In this embodiment, a reductor coupled to the electromotor 100 may provide a less complex reduction gear, for example in the range of 5-50 with all the advantages that this entails for minimizing friction, play, weight and size of the active steering unit

In the third embodiment B-3 the electromotor 100 is also placed in line with the steering column A-3, but at the distal end of the spindle 50. Thus the rotor shaft is coupled to the spindle 50 opposite the steering shaft. This has the advantage that the electromotor 100 can be mounted relatively free from the steering column A-3.

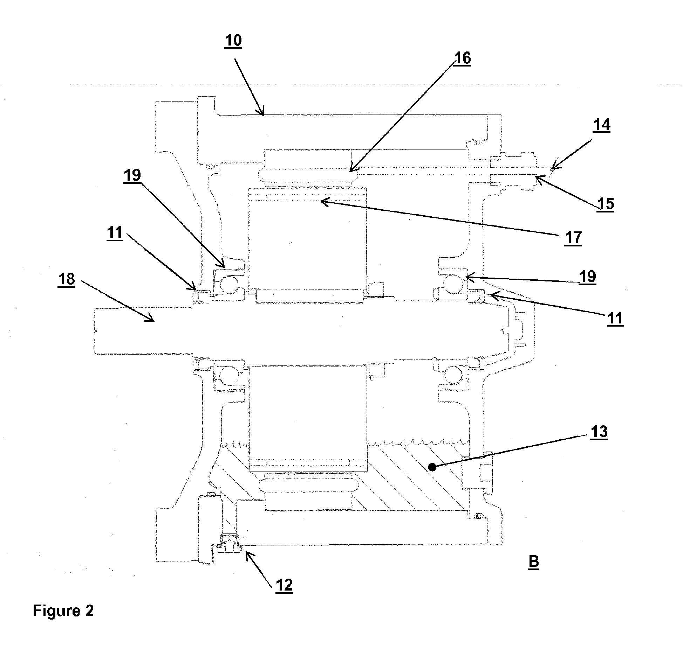

In Figure 2 a detailed partial view is shown of the steering box B, e.g. of a type schematically depicted in Figure 1, and which the electromotor is integrated. The electromotor comprises a sealed compartment 10 mounting a rotor shaft 18. The sealed compartment 10 has multiple seals 11, 15 confining the cooling liquid 13, which may be a non conducting liquid e.g. oil, or more particular a transformer oil, to the housing 10. The shaft 18 is mounted in a bearing 19 and sealed by for example a lip seal 11 that confines the cooling liquid in the sealed compartment. The rotor shaft 18 is coupled to a transmission (not shown) e.g. a planetary gear system that drives the spindle 50 according to description of figure 1. Alternatively also a belt drive system might be considered as favorable transmission system. This might solve packaging problems in case a setup is needed in which the electromotor is placed in parallel to the axis of the spindle system. In used condition the housing 10 can be filled with a fluid 13 that e.g. fills a volume of 5-50 vol percent of the sealed compartment. An optimum is found by providing sufficient heat capacity and heat transport, and at the same time limiting drag. For optimized cooling the fluid 13 is brought in contact with the electrical power wiring of the stator 16 by rotor action so as to cool the electrical power wiring of electromagnetic coils that may be provided in the rotor 17 and/or stator 16. In the depicted example, the rotor 17 is a static magnet with multiple poles, and the stator 16 has coils powered by electric wiring 14 led through a wiring seal 15.

In particular, the cooling fluid 13 is in direct thermal contact with the coil wiring, so that excess heat can be efficiently absorbed and transported by the cooling fluid. It is noted that the sealed compartment may be part of the steering box, or may be a compartment that is separate thereto. When integrated in the steering box, the electromotor compartment may be confined or may be in fluid communication with the transmission, e.g. spindle provided the compartment contains a fluid partly filling said sealed compartment, e.g. the fluid may be transmission oil.

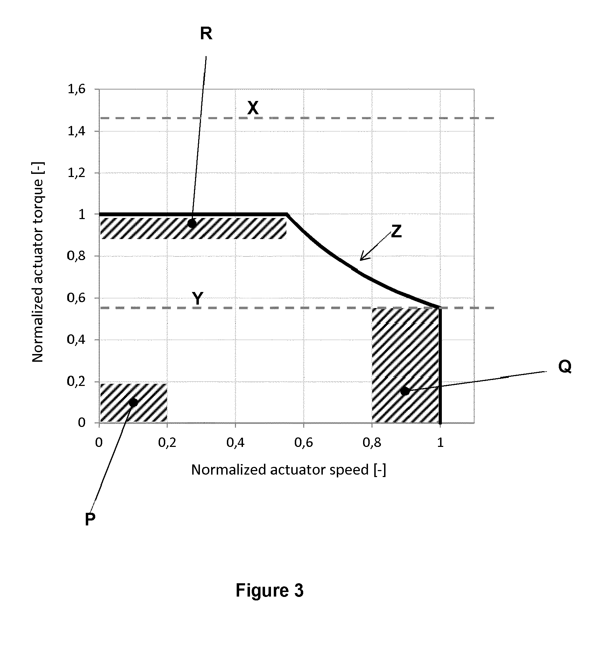

Figure 3 shows a normalized diagram wherein the power range of the electromotor 100 is illustrated, and wherein the effect is shown of the motor assembly with oil filling according to description of figure 2. The diagram shows zones P, Q and R, and equipower line Z that is a product of steering speed and torque. It is shown that zone P is an operating range of typical (high) road behavior, with minimal torque and steering speed. It is found that an estimated 80-90% of the truck operating times is governed by this operating range P of less then about 20% of the maximum torque and steering speed wherein a demand of the steering box is relatively low. Which indicates the potential gain of the power on demand concept that is utilized in the present disclosure.

In the Q operating range the torque demand is still relatively normal, e.g less than 50% of the nominal torque but the steering speed is relatively high. These operating conditions emerge at relatively high vehicle speeds with relative large steering movements, e.g. roundabout steering or emergency steering movements. It is found that the electromotor compartment can function normally without substantial overheating in the P and Q operating ranges, with or without fluid filling (indicated by dashed line Y).

However, in the operating range R the steering speed is relatively normal (low), but the torque is substantially higher than usual, for example, in the range of 80% of a normalized nominal torque figure or more. These conditions are typically found at standstill like for example park steering movement or at low speed maneuvering ("crawling"), typically less than 10 km/h. It is found that the fluid filling (dashed line X), which may be vehicle velocity or torque dependent, enhances the steering box performance potential to a range substantially above the normal torque of e.g. 1.5 of the normalized nominal torque over substantial periods of time, e.g. in operating times larger than typically 5-15 minutes. One of the inventive insights is that motor power can be reduced in this way without safety problems, since the fluid cooled region R is related to parking movement and not with road operation e.g. in the P and Q regions. Accordingly, a power on demand concept is provided that is very energy efficient and is designed relatively compact which is important for enabling such an electro-mechanic power steering system in heavy commercial vehicles.

Figure 4 shows a detailed exemplary setup for a steered axle assembly A, B, C in more detail. The axle assembly comprises a stub axle 180, actuated by a steering arm 185, which in turn is actuated by a steering rod or draglink 160 moved by a pitman arm 155 of the steering box 200. Steering box is actuated by an electromotor 100 via a reductor 130 to provide a direct mechanical actuation of the wheels. A steering shaft 45, coupled to the steering wheel 40 transmits wheel torque and angle to the steering box 200. For example, steering shaft 45 is coupled to spindle 50 (see Figure 1) and pinion wheel 150 is coupled to a steering arrangement 160. The electromotor 100 has a rotor shaft that is coupled to a reductor 130. In addition, it is shown how the steering controller e is designed to provide a steering control feedback loop based on a number of inputs of vehicle state functions. In particular, torque and angle sensors 44 are provided in the steering unit A comprising the steering wheel 40. The torque value T_{sw} and angle value δ are inputted in a master controller e, that is in communicative connection with an electromotor controller a. The master controller e further receives vehicle states inputs such as vehicle velocity V, lateral acceleration ay and yaw rate values. In addition, a force sensor, integrated in the draglink 160, provides low frequency wheel actuation information to the controller via a low pass filter (typically < 5 Hz), in order to give the driver an haptic feedback at the steering wheel 40 on the actual tire to road friction and force conditions. The low pass filter is tuned in such a way that good balance between steering feel and high frequency disturbance rejection is achieved. Motor controller a is fed with master controller inputs e and is provided with a motor temperature control that provides a fail safe electrical power reduction in relation with the actual electromotor temperature. A torque sensor 44 for measuring the actual forces at the steering wheel is favorably integrated in the steering shaft 45 in the near vicinity of the steering wheel.

## Claims

1. Steered axle assembly for a commercial vehicle structure for vehicles larger than 6 tons, the axle assembly comprising:
- a steered axle comprised of a steering arrangement for steering the wheels;
- an electromotor comprising a sealed compartment mounting a rotor and a stator, at least one of the rotor and stator comprising electrical power wiring arranged for electromechanical actuation of said steered axle;
- a steering controller arranged to control said electromotor in correspondence with steering signals received from a main steering unit;
- wherein the compartment contains a fluid partly filling said sealed compartment, said fluid in use brought in contact with the electrical power wiring by rotor action so as to cool said electrical power wiring.

2. Steered axle assembly according to claim 1, wherein said fluid fills a volume of 5-50 vol percent of the sealed compartment.

3. Steered axle assembly according to claim 1-2, wherein the sealed compartment mounts a rotorshaft of the rotor that protrudes through said compartment via a seal.

4. Steered axle assembly according to claim 1-2, further comprising a steering wheel, a steering shaft and a steering box unit that couples the steering shaft to the steering arrangement of the steered axle, wherein the electromotor comprises a rotor shaft that is integrated in the steering box unit.

5. Steered axle according to claim 4, wherein said rotor shaft is coupled to a reductor that is coupled to the steering box unit to provide a direct mechanical actuation of the wheels.

6. Steered axle assembly according to claim 4 or 5 wherein the steering box comprises a spindle coupled to the steering shaft that drives a pinion wheel which is coupled to the steering arrangement, wherein said rotor shaft is coupled in-line via the reductor between the steering shaft and the spindle.

7. Steered axle assembly according to claim 4 or 5 wherein the steering box comprises a spindle coupled to the steering shaft that drives a pinion wheel which is coupled to the steering arrangement, wherein said rotor shaft is coupled to the spindle opposite the steering shaft.

8. Steered axle assembly according to claim 4 or 5, wherein the steering box comprises a spindle coupled to the steering shaft that drives a pinion wheel which is coupled to the steering arrangement, wherein said rotor shaft is coupled in parallel to the spindle by means of a belt drive.

9. Steered axle assembly according to claim 4 or 5, wherein the steering box comprises a spindle coupled to the steering shaft that drives a pinion wheel which is coupled to the steering arrangement, wherein the rotor shaft is coupled to the pinion wheel.

10. Steered axle according to claim 1, wherein the electromotor actuates a hydraulic fluid pump in a hydraulic pressure circuit.

11. Steered axle according to claim 1, wherein the steering controller is arranged to control said electromotor in correspondence with a motor temperature control that limits electromechanical actuation power when a electromotor temperature is measured above a limit threshold.
